# EUROPÄISCHE PATENTANMELDUNG

(11) **EP 2 442 067 A1**
(43) Veröffentlichungstag der Anmeldung: **18.04.2012**
(21) Anmeldenummer: 10013625.8
(22) Anmeldetag: 14.10.2010
(51) Int. Cl.: G01B 11/25

(54) **Vorrichtung und Verfahren zur dreidimensionalen Bilderfassung**

(71) Anmelder: Baumer Innotec AG, 8500 Frauenfeld (CH)
(72) Erfinder: Ihlefeld, Joachim, 01067 Dresden (DE)
(74) Vertreter: Schmidt, Oliver

(57) **Zusammenfassung**

Es ist Aufgabe der Erfindung, ein Verfahren und eine Vorrichtung zur dreidimensionalen Erfassung von Objekten bereitzustellen, welche eine sehr schnelle Erstellung eines 3D-Modells eines Objekts ermöglichen. Mit der Erfindung lässt sich im Allgemeinen die Höheninformation bereits aufgrund eines einzelnen Kamerabildes errechnen.

## Beschreibung

Die Erfindung betrifft allgemein die optische Erfassung der Form dreidimensionaler Objekte. Im Speziellen betrifft die Erfindung eine bildgestützte Erfassung der dreidimensionalen Form von Objekten.

Zur Erfassung der Struktur dreidimensionaler Objekte werden vielfach sogenannte 3D-Laserscanner eingesetzt. Bei einem solchen Scanner wird die Oberfläche des zu erfassenden Objekts mit einem Laserstrahl abgetastet. Hierbei sind Systeme bekannt, die nach dem Flugzeitprinzip arbeiten. Ein weiteres häufig angewendetes Prinzip basiert auf einer Höhenerfassung durch Triangulation. Die Flugzeit-Messung gestattet eine einfache Vermessung auch sehr weit entfernter Objekte, wohingegen die Messgenauigkeit typischerweise gegenüber einem Triangulations-System begrenzt ist. Ein Nachteil beider Systeme liegt darin, dass das Objekt mit dem Laserstrahl abgetastet wird, was zu einer langen Messzeit führt. Generell sind Laserscanner zur Erfassung bewegter Objekte nicht oder nur unter starken Einschränkungen geeignet.

Noch eine weitere Methode zur Erfassung der Topographie von Oberflächen in drei Dimensionen ist die Streifenprojektion. Auch dieses Verfahren basiert auf einer Höhenbestimmung durch Triangulation.

Dabei wird mit einer strukturierten Beleuchtung ein Streifenmuster auf das zu erfassende Objekt projiziert und das Objekt unter einem Winkel zur Lichteinfallsrichtung mit einer Kamera aufgenommen. Die relative Verschiebung der Streifen in der Bildebene beinhaltet die Höheninformation in Aufnahmerichtung.

Obschon das Verfahren eine Erfassung der Höheninformation mit nur einem einzelnen Bild gestattet, hat das Verfahren einen wesentlichen Nachteil. Die Höheninformation ist im Allgemeinen nicht eindeutig anhand eines einzelnen Bildes erfassbar, denn ein Bereich, welcher entlang der Aufnahmerichtung so weit gegenüber einer Referenzfläche verschoben ist, dass im aufgenommenen Bild das Streifenmuster auf dem Bereich wieder mit dem Streifenmuster auf der Referenzfläche koinzidiert, kann nicht eindeutig einer bestimmten Höhenkoordinate zugeordnet werden. Um dem zu begegnen, könnte ein breiteres Streifenmuster verwendet werden.

Dies reduziert allerdings wiederum die Ortsauflösung, beziehungsweise die Punktdichte der aus dem Bild errechneten Punktwolke. In der Praxis wird das Problem der Nicht-Eindeutigkeit daher auf andere Weise gelöst. Es wird eine Bildsequenz aufgenommen, bei welcher in den Bildern das Streifenmuster verändert wird. Eine besonders elegante Methode ist hier eine sogenannte Gray-Codierung. Hierbei wird eine Bildsequenz mit jeweils verdoppelter Streifendichte aufgenommen.

Die Abfolge der Streifen entspricht dann einem Bitmuster entsprechend einer Ordnungszahl, die dann jedem Ort der Oberfläche eindeutig zugeordnet werden kann.

Dabei ist es wichtig, dass der Streifenordnung im Projektor die übereinstimmende Streifenordnung in der Kamera zugeordnet wird. Erst dann ist gesichert, dass nach Auswertung der dem Fachmann einschlägig bekannten Triangulationsformel der berechnete z-Wert des anvisierten Objektpunkts einen Wert aufweist, der mit der tatsächlichen Höhe des Objektpunktes übereinstimmt.

Diese Zuordnung kann dabei über Abzählen der einzelnen Streifen erfolgen. Auf glatten ununterbrochen Flächen ist diese ohne größere Schwierigkeiten möglich. Je nach Position der Kamera, des Projektors oder beiden, aber auch aufgrund einer ungünstigen Form des Objektes (beispielsweise Bohrungen oder Hinterschneidungen) selbst, kommt es zu Abschattungen die eine eindeutige Abzählung der Streifen verhindern. Beispielsweise kann es vorkommen, dass bei einer Bohrung nicht definitiv festgestellt werden kann, wie viele Streifen abgeschattet wurden. Auch kommt es aufgrund der üblicherweise eingesetzten Beleuchtung, die in der Regel gleichförmig ist zu einer periodischen Uneindeutigkeit dass einzelne Streifen nicht voneinander getrennt werden können.

Ebenso sind Verfahren bekannt, die anstelle von Amplitudenmodulierten einfarbigen Mustern auch mehrfarbige Muster projizieren. Auch hier kann die Uneindeutigkeit verringert werden. All diesen Verfahren ist gemein, das sie mechanische Stellelemente zur lateralen Verschiebung eines nichtdynamischen Streifenmusters benötigen, beispielsweise für das Phasenschiebeverfahren, oder aber aktive Bildmatrizen wie beispielsweise LCOS, LCD's DMD's etc. einsetzen um die unterschiedlich modulierten Streifen zu erzeugen.

Neben den sehr nachteiligen Einschränkungen bezüglich stillstehender Objekte weisen sie zudem den Nachteil auf, dass die derart aufgebauten Projektoren sehr teuer, kompliziert und damit fehleranfällig sind. Speziell wenn mehrere Projektoren eingesetzt werden sollen, beispielsweise um das Objekt rundherum zu vermessen sind die Gesamtkosten derartig aufgebauter System sehr hoch.

In der Patentschrift US 7278585 hingegen wird ein redundanter zweidimensionaler Code und ein
Decodierverfahren beschrieben, welcher zu Ermittlung einer zweidimensionalen Position eines für die Codeauswertung angepassten Lesegeräts auf einer Oberfläche dient. Dabei kann die Position des Stiftes ermittelt werden ohne dass dazu das gesamte Muster aufgenommen werden muss. Der Gegenstand dieser Druckschrift wird vollumfänglich in Bezug auf die Ausgestaltung des Codes zum Gegenstand der vorliegenden Anmeldung gemacht. Besonders vorteilhaft ist hierbei, dass eine zeitlich konstante Projektion des Musters zur Positionsermittlung ausreicht.

Insgesamt besteht aber auch bei
Streifenprojektionsverfahren, die eine eindeutige Höheninformation liefern, das gleiche Problem wie bei Laserscannern, nämlich die Notwendigkeit einer Meßsequenz, die immer eine gewisse Zeit in Anspruch nimmt. Die vorstehend beschriebenen Verfahren sind daher allesamt problematisch, wenn die Objekte nicht während des gesamten Meßzyklus absolut stillstehen.

Es ist daher die Aufgabe der Erfindung, ein Verfahren und eine Vorrichtung zur dreidimensionalen Erfassung von Objekten bereitzustellen, welche die vorstehend genannten Nachteile vermeiden und damit eine sehr schnelle Erstellung eines 3D-Modells eines Objekts ermöglichen. Diese Aufgabe der Erfindung wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß sieht die Erfindung eine Vorrichtung zur Erfassung von dreidimensionalen Formen von Objekten vor, welche
- eine Kamera,
- eine Beleuchtungseinrichtung, und
- eine Recheneinrichtung zur Errechnung von dreidimensionalen Ortskoordinaten einer Objektoberfläche umfasst. Dabei sind die Kamera und die
Beleuchtungseinrichtung so angeordnet, dass zwischen der Beleuchtungsrichtung und der Betrachtungsrichtung der Kamera ein Winkel eingeschlossen wird, um eine Höhenermittlung im Triangulationsverfahren zu ermöglichen. Die Beleuchtungseinrichtung stellt dabei eine strukturierte Beleuchtung eines zu erfassenden, vor der Kamera angeordneten Objekts in Form eines Beleuchtungsmusters bereit, wobei das Beleuchtungsmuster einen in zwei unterschiedlichen Raumrichtungen modulierten zweidimensionalen Code mit Codeelementen enthält,

Die Recheneinrichtung ist mit der Kamera verbunden, so dass Bilddaten eines Digitalbildes von der Kamera an die Recheneinrichtung übertragbar sind. Die Recheneinrichtung ist dazu eingerichtet, die Koordinaten der Codeelemente und die in den Codeelementen codierte Information aus dem von der Kamera erhaltenen Digitalbild zu extrahieren, sowie anhand der decodierten Information eine Indizierung der Codeelemente vorzunehmen, und anhand der Indizierung der Codeelemente und deren Position im Bild eine Höheninformation des mit dem Codeelement beleuchteten Ortes mit nur einer Aufnahme der Kamera die 2D- und 3D-Informationen des Objektes zu errechnen.

Gemäß der Erfindung lässt sich die Höheninformation aufgrund eines einzelnen Kamerabildes im Allgemeinen bereits errechnen. Ein Problem ergibt sich allerdings, wenn Codeelemente in Blickrichtung der Kamera abgeschattet oder mehrere Codeelemente überlagert werden. In diesem Fall kann die Höheninformation mehrdeutig werden. Mit anderen Worten können Artefakte durch im aufgenommenen Bild fehlende Rasterelemente entstehen. Diese Mehrdeutigkeiten können eliminiert werden, wenn, wie erfindungsgemäß vorgesehen, ein in zwei unterschiedlichen Raumrichtungen modulierter zweidimensionaler Code mit Codeelementen verwendet wird, bei dem entlang dieser Richtungen benachbarte Codeelemente sich voneinander unterscheiden. Diese Codierung ermöglicht es, Mehrdeutigkeiten in praktisch allen Fällen bereits in einem einzelnen Bild dadurch zu eliminieren, dass mittels der zusätzlichen Codeinformation Verbindungen zwischen Codeelementen, zwischen denen eines oder mehrere Codeelemente im Bild fehlen, durch die Recheneinrichtung hergestellt werden.

Solche Mehrdeutigkeiten können erfindungsgemäß eliminiert werden, wenn die Nachbarschaftsbeziehungen der Codeelemente berücksichtigt werden. Dazu kann gemäß einer Weiterbildung der Erfindung die Recheneinrichtung dazu eingerichtet sein,
- im Digitalbild die Koordinaten der Codeelemente des zweidimensionalen Codes zu detektieren und
- neben den Koordinaten zumindest ein weiteres Merkmal der Codeelemente zu bestimmen und mit dem weiteren Merkmal einen Codezustand zu quantisieren,
- Nachbarschaften der Codeelemente zu bestimmen,
- aus den bestimmten Nachbarschaften ein Gitter mit zugeordneten quantisierten Codezuständen zu erzeugen und diese quantisierten Codezustände in einer Matrix abzulegen,
- die Matrix zu decodieren, indem
- eine Zuordnungstabelle der detektierten Codelemente zu Indizes der Strahlen der Beleuchtungsquelle oder zu Sollpositionen gebildet wird, und
- anhand der Zuordnungstabelle und abgespeicherten Modelldaten der Strahlungsquelle und des Bildsensors ein dreidimensionales Modell des von der Kamera aufgenommenen Objekts zu berechnen.

Die quantisierten Codezustände repräsentieren die verschiedenen Informationstypen der Codeelemente. Beispielsweise wären bei einem abwechselnd aus einfachen Kreisen und Dreiecken gebildeten Gitter zwei quantisierte Codezustände vorhanden, welche die beiden vorkommenden Formen der Codeelemente repräsentieren.

Zur Bestimmung der Nachbarschaften von Codeelementen kann von der Recheneinrichtung eine Bestimmung anhand von Nachbarschaftswahrscheinlichkeiten erfolgen, wobei die Berechnung einer Nachbarschaftswahrscheinlichkeit für zwei Codeelemente zumindest anhand des gegenseitigen Abstands im Digitalbild erfolgt.

Die Beleuchtungsrichtung umfasst in vorteilhafter Ausgestaltung der Erfindung einen Laser und ein vor dem Laser angeordnetes diffraktives optisches Element (DOE), wobei das diffraktive optische Element das Beleuchtungsmuster mit dem in zwei unterschiedlichen Raumrichtungen modulierten zweidimensionalen Code erzeugt. Die Erzeugung des zweidimensionalen Codes mit einem DOE bietet den Vorteil, ein scharfes Muster in nahezu unbeschränkter Grösse zu erzeugen. jeder Tiefenebene zu erzeugen. Ein Anpassen der Beleuchtungsoptik auf unterschiedliche Tiefenebenen kann somit vorteilhaft vermieden werden.

Besonders vorteilhaft ist des Weiteren die Abbildung punktförmiger, beziehungsweise inselförmiger Strukturen auf die zu erfassenden Flächen. Die Leuchtdichte kann somit im Vergleich zu einer flächigen Beleuchtung deutlich vergrößert werden. Beispielsweise ist somit auch auf dunklen Teilflächen des Objektes auch so noch ein ausreichender Kontrast gewährleistet. Besonders vorteilhaft ist es, wenn das diffraktive optische Element als Phasenelement ausgebildet ist. Vorzugsweise ein Mehrphasen-DOE beispielsweise ein 4- oder 8-Phasen-DOE. Die Anzahl der Phasen steht dabei für die Anzahl der kodierbaren diskreten Phasenstufen.

Mit Phasen-DOE's können sehr hohe Beugungseffizienzen erreicht werden. Die DOE's werden dabei typischerweise auf Quarz als Substratmaterial aufgebracht. Es sind aber auch andere Substrate denkbar. Ein weiterer Vorteil ist die vereinfachte Herstellung, da die Phasen-DOE's mittels Pressmatrizen in größeren Stückzahlen hergestellt werden können. So können gegebebenfalls auch mehrere DOE's verwendet werden, um das Objekt aus unterschiedlichen Richtungen zu beleuchten. Auch die zur Beleuchtung verwendeten oder verwendbaren Laserdioden stehen kostengünstig zur Verfügung. Die umschließende Beleuchtung eines Objektes aus mehreren Richtungen ist somit kosteneffizient zu bewerkstelligen.

In einer besonders bevorzugten Ausführungsform der erfindungsgemäßen Vorrichtung weist die
Beleuchtungseinrichtung mehrere Sub-Beleuchtungseinrichtungen oder Lichtquellen auf. So können Abschattungen oder Hinterschneidungen der Objekte untereinander die eine Bestimmung der Ortskoordinaten erschweren vorteilhaft reduziert werden.

Es ist, wie bereits gesagt besonders vorteilhaft, wenn die Beleuchtungseinrichtung ein Beleuchtungsmuster in Form einer Anordnung isolierter oder inselförmiger Codeelemente erzeugt. Im Gegensatz zu streifenförmigen Beleuchtungen können so höhere Leuchtdichten bei gleicher Ausgangsleistung der Lichtquelle erzielt werden. Somit kann auch bei dunkeln Teilflächen des zu untersuchenden Objekts noch ein ausreichender Kontrast erzielt werden.

Es sind aber auch andere inselförmige Codeelemente denkbar, beispielsweise in Form von Ellipsen. Hier könnte die Codierung in der Winkelorientierung (beispielsweise von 0° bis 90°) der Haupt- oder Nebenachsen der Ellipsen verschlüsselt sein. Es könnten aber auch der Durchmesser der Hauptachsen variiert werden. So würde dieser Wert langsam verringert bis die Ellipse zu einem Kreis geworden ist um nach weiterer Verringerung zur Nebenachse zu werden. Die vormalige Nebenachse ist nun die Hauptachse. Im Allgemeinen ist mit Codeelementen jede Form von Modulation gemeint, die mittels eines Bildsensors ausgewertet werden kann und eine ausreichende Unterscheidung ermöglicht.

In einer ganz besonders bevorzugten Ausführungsform ist die Fläche die das Beleuchtungsmuster in der Objektebene beleuchtet, größer als das beleuchtete Objekt selbst.

Damit ist es möglich durch die das Objekt umgebenden Referenzfläche in ihrer Position bekannte Ortskoordinaten zur Berechnung der Höhenkoordinaten des zu untersuchenden Objektes heranzuziehen.

Es ist des Weiteren vorteilhaft, wenn die
Beleuchtungseinrichtung einen gepulsten Laser umfasst. Hiermit können sehr hohe Spitzenleistungen erzeugt werden. Ein Beispiel für einen solchen gepulsten Laser ist eine Pulse Laser Diode. Beispielsweise kann eine Infrarot-Laserdiode mit einer Leistung von 10W und einer Pulsbreite von typischerweise 50ns verwendet werden. Es sind auch noch leistungsstärkere Laserdioden erhältlich. Es sind aber auch CW Laser Dioden denkbar (engl.: CW; continous wave). Geeignet ist beispielsweise eine Laserdiode mit einer Leistung im Bereich von 3W.

In einer weiteren ganz bevorzugten Ausführungsform erfolgt die Berechnung der 2D- und/oder 3D-Koordinaten auf einem FPGA und/oder einem DSP und/oder einem vergleichbaren Bauelement programmierbarer Logik. Somit ist eine Berechnung in Videoechtzeit gewährleistet.

Die Berechnung kann aber auch auf einen externen angeschlossen Vorrichtung erfolgen, sofern deren Rechenleistung dies gestattet.

Nach dem erfindungsgemäßen Verfahren zur Erfassung von dreidimensionalen Formen von Objekten wird
- ein Objekt vor einer Kamera angeordnet,
- das Objekt mittels einer Beleuchtungseinrichtung beleuchtet und
- das beleuchtete Objekt mit der Kamera aufgenommen. Dabei wird
- das Objekt so gegenüber der Kamera und der Beleuchtungseinrichtung angeordnet, dass zwischen der Richtung von der Beleuchtungseinrichtung zum Objekt und der Betrachtungsrichtung der Kamera in Richtung auf das Objekt ein Winkel eingeschlossen wird. Weiterhin
- erzeugt die Beleuchtungseinrichtung eine strukturierte Beleuchtung eines zu erfassenden, vor der Kamera angeordneten Objekts in Form eines Beleuchtungsmusters, welches
- einen in zwei unterschiedlichen Raumrichtungen modulierten zweidimensionalen Code mit Codeelementen enthält. Von der Kamera wird
- ein Digitalbild an eine Recheneinrichtung zur Errechnung von dreidimensionalen Ortskoordinaten der Objektoberfläche übertragen, wobei
- die Recheneinrichtung die Koordinaten der Codeelemente und die in den Codeelementen codierte Information aus dem von der Kamera erhaltenen Digitalbild extrahiert, sowie
- anhand der decodierten Information der Codeelemente eine Indizierung der Codeelemente vornimmt, und
- anhand der Indizierung der Codeelemente und deren

Position im Bild eine Höheninformation des mit dem Codeelement beleuchteten Ortes errechnet.

In einer besonders bevorzugten Weiterbildung werden durch die Recheneinrichtung
- im Digitalbild die Koordinaten der Codeelemente des zweidimensionalen Codes detektiert und
- neben den Koordinaten zumindest ein weiteres Merkmal der Codeelemente bestimmt und mit dem weiteren Merkmal einen Codezustand quantisiert, sowie
- anhand der Codezustände Nachbarschaften der Codeelemente bestimmt, und
- aus den bestimmten Nachbarschaften ein Gitter mit zugeordneten quantisierten Codezuständen erzeugt und diese quantisierten Codezustände in einer Matrix einträgt,
- die Matrix decodiert, indem
- eine Zuordnungstabelle der detektierten Codelemente zu Indizes der Strahlen der Beleuchtungsquelle oder zu Sollpositionen gebildet wird, und
- anhand der Zuordnungstabelle und abgespeicherten Modelldaten der Strahlungsquelle und des Bildsensors ein dreidimensionales Modell des von der Kamera aufgenommenen Objekts berechnet wird.

In einem weiteren besonders bevorzugten Verfahren, bei welchem Nachbarschaftswahrscheinlichkeiten von Codeelementen unter Berücksichtigung des gegenseitigen Abstandes der Codeelemente im Digitalbild berechnet werden, und wobei anhand der Nachbarschaftswahrscheinlichkeiten Codeelementen zu Chains zusammengefasst werden.

Um die Genauigkeit der Bestimmung der 3D-Information zu erhöhen, ist es weiterhin günstig, die Positionen der Codeelemente aus dem Digitalbild durch die
Recheneinrichtung mit Subpixel-Genauigkeit zu bestimmen.

Es ist weiterhin vorteilhaft, mit der
Beleuchtungseinrichtung ein Beleuchtungsmuster mit inselförmigen Codeelementen zu erzeugen wird, wobei die Codeelemente eine Modulation bezüglich ihrer Form oder Größe aufweisen, und wobei in der Modulation Positionsinformation codiert ist.

Um die Segmentierung zu erleichtern, hat es sich weiterhin als sehr günstig herausgestellt, mit der
Beleuchtungseinrichtung ein Beleuchtungsmuster zu erzeugen, bei welchem die Codeelemente in einem hexagonalen Raster angeordnet sind.

Die Erfindung wird nachfolgend anhand von
Ausführungsbeispielen und unter Bezugnahme auf die beigeschlossenen Zeichnungen näher erläutert. Dabei verweisen gleiche Bezugszeichen auf gleiche oder entsprechende Elemente.

Es zeigen:
**Fig. 1a** zeigt eine Gesamtansicht eines Streifenprojektors nach Stand der Technik bei der Referenzbestimmung sowie das sich ergebende Streifenbild in der Kamera.
**Fig. 1b** zeigt eine Gesamtansicht eines Streifenprojektors nach Stand der Technik bei der Vermessung eines kubischen Objektes sowie das sich ergebende Streifenbild in der Kamera.
**Fig. 1c** zeigt eine Gesamtansicht eines Streifenprojektors nach Stand der Technik bei der Vermessung eines kubischen Objektes sowie das sich ergebende Streifenbild in der Kamera. Hierbei ist der Körper und Beobachtungsrichtung derart ausgedehnt das es im Vergleich zu dem Bild aus Fig. 1b zu einer Uneindeutigkeit kommt.
**Fig. 2a** zeigt eine Gesamtansicht erfindungsgemäßen Streifenprojektors bei der Vermessung der Situation aus Fig. 1a.
**Fig. 2b** zeigt eine Gesamtansicht erfindungsgemäßen Streifenprojektors bei der Vermessung der Situation aus Fig. 1b.
**Fig. 2c** zeigt eine Gesamtansicht erfindungsgemäßen Streifenprojektors bei der Vermessung der Situation aus Fig. 1c.
**Fig. 3** zeigt eine 3D-Ansicht einer Beleuchtungseinrichtung und das die Beleuchtungseinrichtung beleuchtende Objekt.
**Fig. 4** zeigt die sich aus Fig. 3 ergebende Punktewolke der Schnittpunkte der Strahlen der Beleuchtungseinrichtung mit dem Objekt bzw. Referenzebene in einer Draufsicht. Die Raumwinkelverteilung der Strahlen sind hierbei aquidistant gewählt. Es sind aber auch andere Punkteverteilungen denkbar.
**Fig. 5** zeigt die sich aus Fig. 3 ergebende Punktewolke der Schnittpunkte der Strahlen der Beleuchtungseinrichtung mit dem Objekt bzw. Referenzebene in einer Draufsicht.

Die Raumwinkelverteilung der Strahlen ist hierbei kartesisch gewählt.

**Fig. 6** zeigt einen Bildausschnitt aus Fig. 5 mit eingezeichneten Gitterlinien.

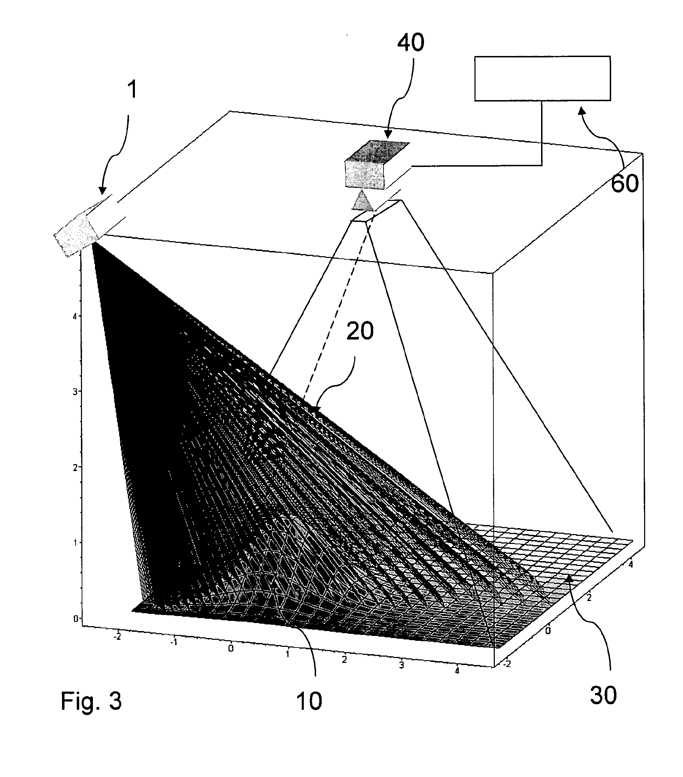

In den Figuren 3 bis 6 wird dabei wird anhand einer Gaussfläche demonstriert wie mittels einer einzigen Aufnahme die kompletten 2D und 3D-Daten des anvisierten Objektes ermittelt werden können.

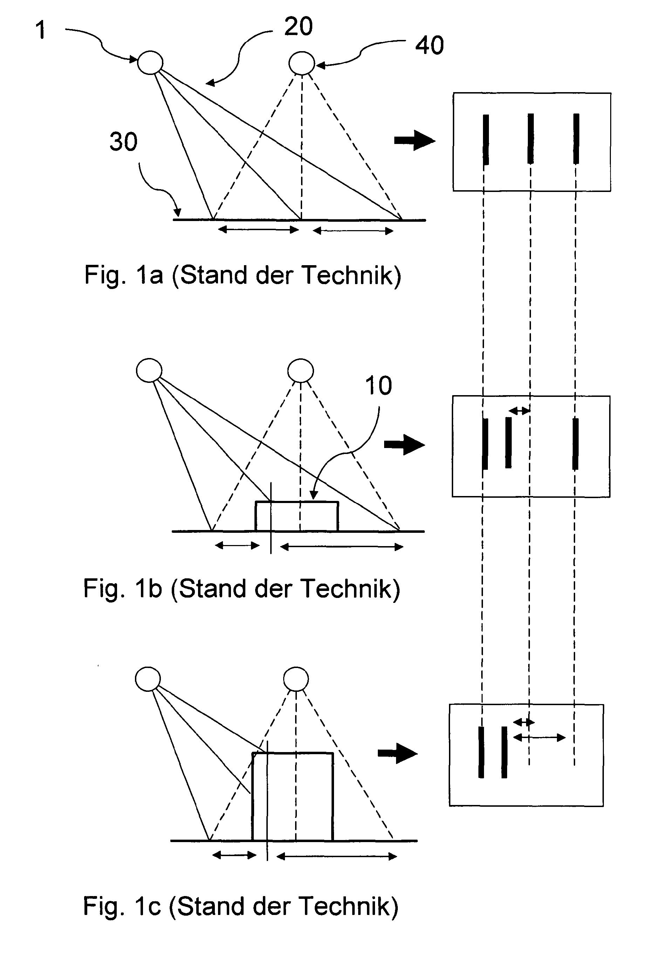

Fig. 1a zeigt eine Gesamtansicht eines Streifenprojektors nach Stand der Technik bei der Referenzbestimmung sowie das sich ergebende Streifenbild in der Kamera. Ein Streifenprojektor 1 projiziert dabei auf eine Fläche eine Bild. Dieses projizierte Bild wird von der Kamera 40 aufgenommen. Die Messung dient der Kalibrierung der Kamera 40. Sind die Positionskoordinaten der Kamera der Streifen bekannt, können Objekte 10 die in einem nächsten Schritt in das Bildfeld der Kamera 40 positioniert werden bestimmt werden. Dies ist in Fig. 1b geschehen. In Fig. 1b ist das Objekt 10 ein Quader.

Da zwischen Streifenprojektor 1 und Kamera 40 ein Winkel eingeschlossen ist kommt es bei dem zentralen Streifen zu einer Verschiebung im Bild der Kamera. Der Streifen wandert dabei nach links. Aus einem Vergleich der Streifenposition aus der Referenzmessung kann auf die Höhe des Körpers zurückgeschlossen werden. Diese Höhenbestimmung ist allerdings nur innerhalb eines gewissen
Eindeutigkeitsbereichs eindeutig.

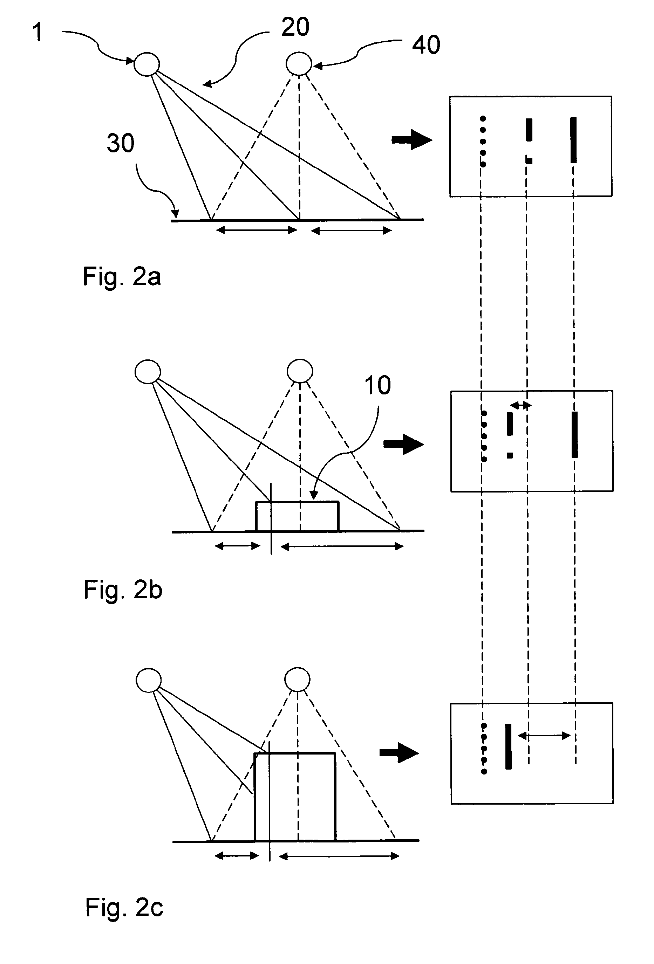

Erreicht der Körper eine bestimmte Höhe (Fig. 1c) kommt der rechte Streifen an die Stelle des ursprünglich dritten Streifens zu liegen. Da in der Kamera die Streifen nicht zu unterschieden sind, da sie alle gleich aussehen, ergibt sich bezüglich der beiden Streifen dasselbe Bild. Es ist also unsicher welche genaue Höhe das Objekt aufweist. Diese Uneindeutigkeit kann mit der erfindungsgemäßen Vorrichtung beseitigt werden. Werden die Streifen codiert können die Streifen trotz Überlagerung ihrer Position bei der Referenzmessung eindeutig zugeordnet werden (Vergleich Fig. 2a bis 2c mit derselben Messanordnung aus Fig 1a bis Fig. 1c).

Fig. 3 zeigt eine 3D-Ansicht einer Beleuchtungseinrichtung 1 und das die Lichtquelle beleuchtende Objekt 10. Die Beleuchtungseinrichtung 1 befindet sich an einer bestimmten Position. Von der Beleuchtungseinrichtung 1 gehen Strahlen 20 aus die an sich mit dem Objekt 10 bzw. der Referenzfläche 30 an bestimmten Punkten kreuzen.

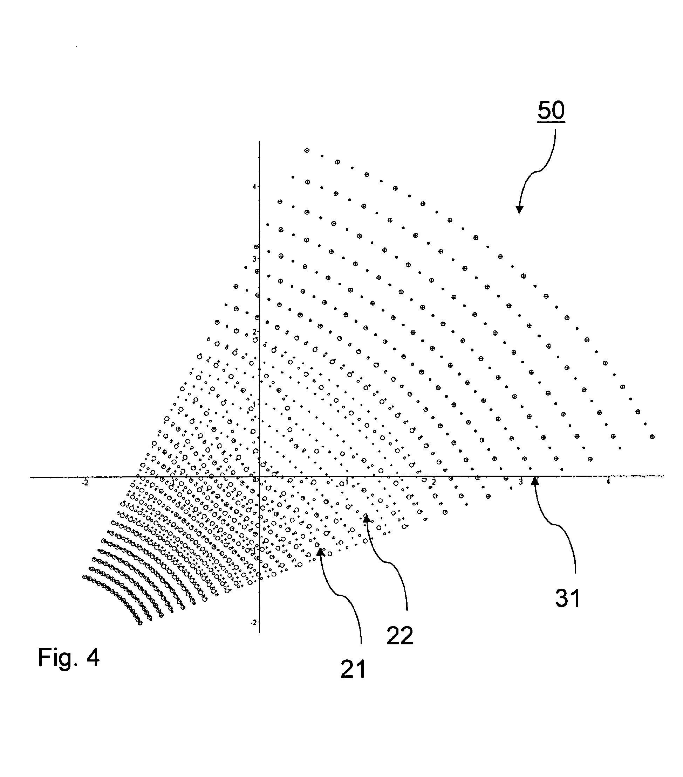

Fig. 4 zeigt diese sich aus Fig. 3 ergebende Schnittpunkte der Referenzfläche 30 und des Objektes 10 als Punktewolke in einer Draufsicht. Die Raumwinkelverteilung der Strahlen sind hierbei äquidistant gewählt. Die Kreuzungspunke der Strahlen mit der Referenzfläche sind dabei als Kreuze 31 ausgeführt, die Kreuzungspunkte mit dem Objekt als Kreise 21 bzw. 22. Die unterschiedlichen Radien symbolisieren hierbei die Codierung. Dort wo sich Objekt 10 und Referenzfläche 30 entsprechen stimmen die Positionen der Kreuzungspunkte der Referenzfläche 30 mit denen des Objektes 10 überein.

Hat das Objekt 10 eine von der Referenzfläche 30 abweichende Topographie kommt es aufgrund der unterschiedlichen Positionen von Kamera 40 (in Fig. 4 nicht eingezeichnet; hier eine Draufsicht, die Kamera 40 befindet sich also genau über dem Objekt 10 in der Koordinatenmitte) zu einer Verschiebung der Kreuzungspunkte von Referenzfläche 30 und Objekt 10.

Der Wert dieser Verschiebung steht für die lokale Erhöhung in Bezug auf die Referenzfläche 30, also die Höhe des Objektes 10 über der Referenzfläche 30.

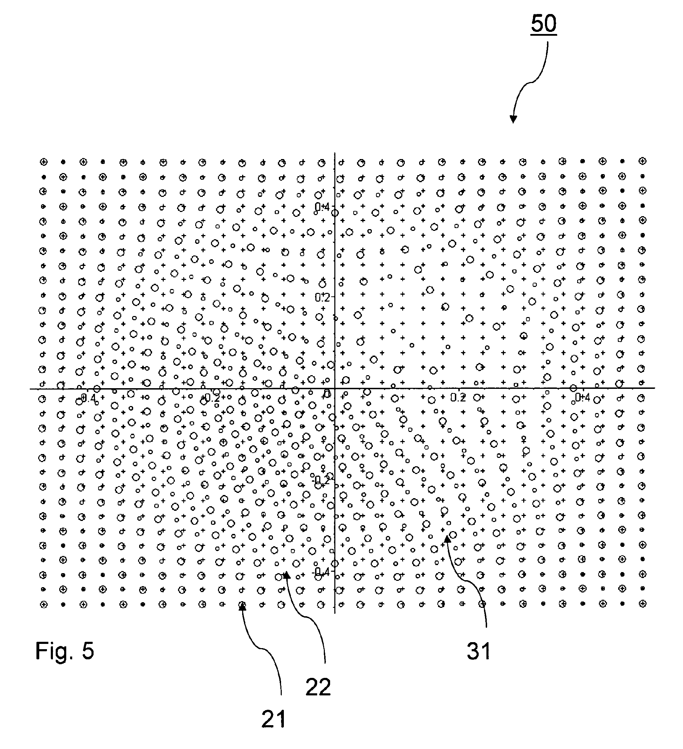

Fig. 5 zeigt die sich aus Fig. 3 ergebende Punktewolke der Schnittpunkte der Strahlen der Beleuchtungseinrichtung 1 mit dem Objekt 10 bzw. der Referenzfläche 30 in einer Draufsicht. Die Raumwinkelverteilung der Strahlen in Fig. 5 ist hierbei kartesisch gewählt. Auch hier kommt es zu einer lokalen Verschiebung der Schnittpunkte von Objekt 10 und Referenzfläche 30.

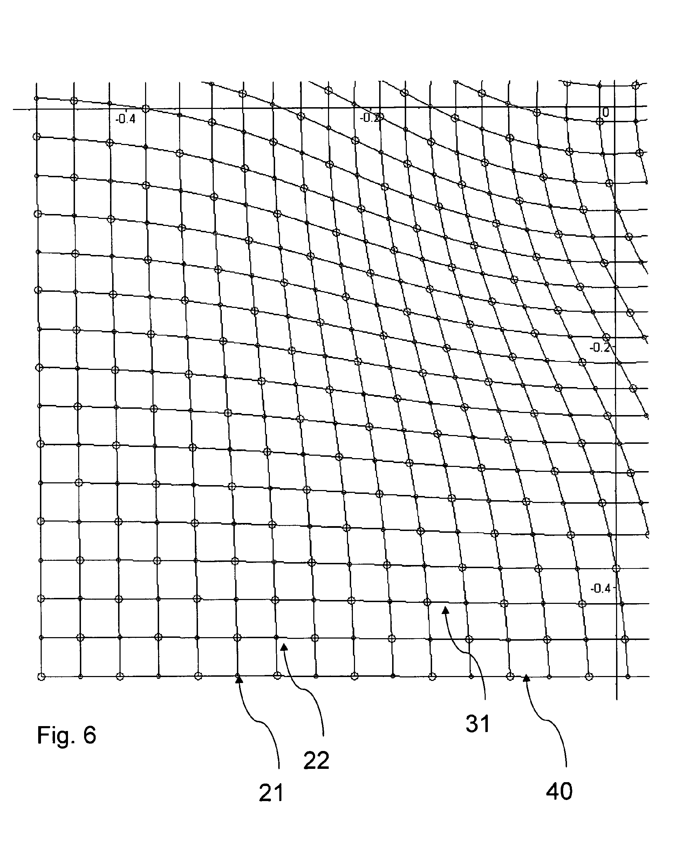

Fig. 6 zeigt einen Bildausschnitt aus Fig. 5 mit eingezeichneten Gitterlinien. Hierbei wurden die zusammengehörigen Strukturelemente 23 durch Linien verbunden. Die lokale Krümmung der Liniensegment steht dabei für die Topographie des Objektes 10.
Mit anderen Worten kann aus der Abweichung des verzerrten Gitters 40 von dem unverzerrten Gitter der Referenzfläche die Objekttopographie rekonstruiert werden.

Nachfolgend werden die Schritte zur 3D-Positionsbestimmung nochmals genauer erläutert:
1.) Eine Referenzmessung auf einem Referenzobjekt, wie beispielsweise einer ebenen Fläche wird durchgeführt. Daraus entsteht ein
   ebenes Gitter mit äquidistant verteilten Punkten deren x,y,z-Position im Prinzip bekannt ist. Das Gitter muss dabei nicht zwangsweise eben oder äquidistant sein. Es kommt nur darauf an, dass die Position des Referenzobjektes bekannt ist.
2.) Das zu untersuchende Objekt wird eingebracht. Die projizierten Punkte (schon 2D-codiert) verschieben sich in Abhängigkeit der Objekttopographie auf dem 2D-Bildsensor der Kamera. Es können je nach Aufnahmegeometrie, Form und Eigenschaften des Objekt noch Uneindeutigkeiten auftreten.
3.) Es folgt die Schnittpunktsberechnung. Es werden, vorzugsweise mit einer Faltungsoperation die Schnittpunkte bzw. Schwerpunkte der projizierten Punkte mit der Referenzfläche ermittelt. Nun sind die Positionen der verschobenen Punkte x',y' sowie die Codierung aller sichtbaren Punkte bekannt. Die Informationen werden in eine Liste eingetragen.
4.) Abstandsberechnung: Von jedem der eben ermittelten Punkte wird durch eine Abstandberechnung eine Menge an N nächsten Nachbarn berechnet. Die Punkte N' mit dem kleinsten Abstand gehören zusammen. Hierbei kann es aber zu Fehlstellen beispielsweise durch Bohrungen kommen. In der Regel entstehen aber lokale Gitter in dem mehrere Punkte miteinander verbunden sind bzw. verbunden werden können (Segmentierung), sofern nicht alle "Punkte" beispielsweise in eine Bohrung fallen und damit in der Kamera nicht sichtbar sind. Dies wird je nach Größe der Nachbarschaften immer unwahrscheinlicher.
5.) Berechnung der Position: Begonnen wird vorzugsweise in der Bildmitte. Dabei werden die Eigenschaften der Punkte (große oder kleine Kreise etc.) in eine Matrix (proportional zum Bildfeld) eingetragen. Da das projizierte Bild der Lichtquelle größer als das Bildfeld der Kamera ist, erhält man aus Schritt 1.) eine Submatrix im Vergleich zur Referenzmatrix. Diese zum Teil fehlerbehaftete Codematrix wird nun decodiert. Nach der Decodierung sind die Koordinaten der auf das Objekt projizierten Punkte im Koordinatensystem der Lichtquelle bekannt. Fehlende Stellen können iterativ bearbeitet werden. Da nun die Positionen von beiden Punktwolken der von den Referenzpunkten und der der verschobenen Objektpunkte in einem Koordinatensystem bekannt ist, kann die Höhenkoordinate berechnet werden.

Es ist dem Fachmann ersichtlich, dass die Erfindung nicht auf die vorstehend beschriebenen Ausführungsbeispiele beschränkt ist, sondern in vielfältiger Weise variiert werden kann.

Ferner ist ersichtlich, das die Merkmale unabhängig davon, ob sie in der Beschreibung, den Ansprüchen, den Figuren oder anderweitig offenbart sind, auch einzeln wesentliche Bestandteile der Erfindung definieren können, selbst wenn sie zusammen mit anderen Merkmalen gemeinsam beschrieben sind.

## Patentansprüche

1. Vorrichtung zur Erfassung von dreidimensionalen Formen von Objekten, umfassend
- eine Kamera (40),
- eine Beleuchtungseinrichtung (1), und
- eine Recheneinrichtung (60) zur Errechnung von dreidimensionalen Ortskoordinaten einer Objektoberfläche (10), wobei
- die Kamera (40) und die Beleuchtungseinrichtung (1) so angeordnet sind, dass zwischen der Beleuchtungsrichtung (1) und der Betrachtungsrichtung der Kamera (40) ein Winkel eingeschlossen wird, und wobei
- die Beleuchtungseinrichtung (1) eine strukturierte Beleuchtung eines zu erfassenden, vor der Kamera (40) angeordneten Objekts (10) in Form eines Beleuchtungsmusters (50) bereitstellt, wobei
- das Beleuchtungsmuster (50) einen in zwei unterschiedlichen Raumrichtungen modulierten zweidimensionalen Code mit Codeelementen enthält, derart, dass entlang dieser Raumrichtungen benachbarte Codeelemente sich voneinander unterscheiden,
- die Recheneinrichtung mit der Kamera (40) verbunden ist, so dass Bilddaten eines Digitalbildes von der Kamera (40) an die Recheneinrichtung (60) übertragbar sind,
- und wobei die Recheneinrichtung (60) dazu eingerichtet ist, die Koordinaten der Codeelemente und die in den Codeelementen codierte Information aus dem von der Kamera (40) erhaltenen Digitalbild zu extrahieren, sowie
- anhand der decodierten Information eine Indizierung der Codeelemente vorzunehmen, und
- anhand der Indizierung der Codeelemente und deren Position im Bild eine Höheninformation des mit dem Codeelement beleuchteten Ortes zu errechnen und mit nur einer Aufnahme der Kamera (40) die 2D und 3D Informationen des Objektes (10) zu ermitteln.

2. Vorrichtung gemäß dem vorstehenden Anspruch, wobei die Recheneinrichtung (60) dazu eingerichtet ist,
- im Digitalbild die Koordinaten der Codeelemente des zweidimensionalen Codes zu detektieren und
- neben den Koordinaten zumindest ein weiteres Merkmal der Codeelemente zu bestimmen und mit dem weiteren Merkmal einen Codezustand zu quantisieren,
- Nachbarschaften der Codeelemente zu bestimmen,
- aus den bestimmten Nachbarschaften ein Gitter mit zugeordneten quantisierten Codezuständen zu erzeugen und diese quantisierten Codezustände in einer Matrix abzulegen,
- die Matrix zu decodieren, indem
- eine Zuordnungstabelle der detektierten Codelemente zu Indizes der Strahlen der Beleuchtungsquelle oder zu Sollpositionen gebildet wird, und
- anhand der Zuordnungstabelle und abgespeicherten Modelldaten der Strahlungsquelle und des Bildsensors ein dreidimensionales Modell des von der Kamera aufgenommenen Objekts zu berechnen.

3. Vorrichtung gemäß einem der vorstehenden Ansprüche, wobei die Recheneinrichtung (60) dazu eingerichtet ist, Nachbarschaften von Codeelementen anhand von Nachbarschaftswahrscheinlichkeiten zu bestimmen, wobei die Berechnung einer Nachbarschaftswahrscheinlichkeit für zwei Codeelemente zumindest anhand des gegenseitigen Abstands im Digitalbild erfolgt.

4. Vorrichtung gemäß einem der vorstehenden Ansprüche, wobei die Beleuchtungsrichtung (1) einen Laser und ein vor dem Laser angeordnetes diffraktives optisches Element umfasst, wobei das diffraktive optische Element das Beleuchtungsmuster (850) mit dem in zwei unterschiedlichen Raumrichtungen modulierten zweidimensionalen Code erzeugt und wobei das diffraktive optische Element vorzugsweise durch ein Phasenelement gebildet wird.

5. Vorrichtung gemäß einem der vorstehenden Ansprüche, wobei die Beleuchtungseinrichtung (1) mehrere Beleuchtungseinrichtungen umfasst.

6. Vorrichtung gemäß einem der vorstehenden Ansprüche, **dadurch gekennzeichnet, dass** die Beleuchtungseinrichtung (1) ein Beleuchtungsmuster (50) in Form einer Anordnung isolierter oder inselförmiger Codeelemente erzeugt.

7. Vorrichtung gemäß einem der vorstehenden Ansprüche, **dadurch gekennzeichnet, dass** das von der Beleuchtungseinrichtung (1) erzeugbare Beleuchtungsmuster (50) eine größere laterale Ausdehnung als das Bildfeld der Kamera (40) hat.

8. Vorrichtung gemäß einem der vorstehenden Ansprüche, **dadurch gekennzeichnet, dass** die
Beleuchtungseinrichtung (1) einen gepulsten Laser umfasst.

9. Vorrichtung gemäß einem der vorstehenden Ansprüche, **dadurch gekennzeichnet, dass** die Berechnung der 2D-und/oder 3D-Koordinaten auf einem FPGA und/oder einem DSP und/oder einem vergleichbaren Bauelement programmierbarer Logik erfolgt.

10. Verfahren zur Erfassung von dreidimensionalen Formen von Objekten, bei welchem
- ein Objekt (10) vor einer Kamera (40) angeordnet,
- das Objekt (10) mittels einer
Beleuchtungseinrichtung (1) beleuchtet und
- das beleuchtete Objekt (10) mit der Kamera (40) aufgenommen wird, wobei
- das Objekt (10) so gegenüber der Kamera (40) und der Beleuchtungseinrichtung (1) angeordnet wird, dass zwischen der Richtung von der Beleuchtungseinrichtung (1) zum Objekt (10) und der Betrachtungsrichtung der Kamera (40) in Richtung auf das Objekt (10) ein Winkel eingeschlossen wird, und wobei
- die Beleuchtungseinrichtung (1) eine strukturierte Beleuchtung eines zu erfassenden, vor der Kamera (40) angeordneten Objekts (10) in Form eines Beleuchtungsmusters (50) erzeugt, welches
- einen in zwei unterschiedlichen Raumrichtungen modulierten zweidimensionalen Code mit Codeelementen enthält, und wobei
- von der Kamera (40) ein Digitalbild an eine Recheneinrichtung (1) zur Errechnung von dreidimensionalen Ortskoordinaten der Objektoberfläche (10) übertragen wird
- und wobei die Recheneinrichtung (60) die Koordinaten der Codeelemente und die in den Codeelementen codierte Information aus dem von der Kamera (40) erhaltenen Digitalbild extrahiert, sowie
- anhand der decodierten Information der Codeelemente eine Indizierung der Codeelemente vornimmt, und
- anhand der Indizierung der Codeelemente und deren Position im Bild eine Höheninformation des mit dem Codeelement beleuchteten Ortes errechnet.

11. Verfahren gemäß dem vorstehenden Anspruch, wobei die Recheneinrichtung (60)
- im Digitalbild die Koordinaten der Codeelemente des zweidimensionalen Codes detektiert und
- neben den Koordinaten zumindest ein weiteres Merkmal der Codeelemente bestimmt und mit dem weiteren Merkmal einen Codezustand quantisiert, sowie
- anhand der Codezustände Nachbarschaften der Codeelemente bestimmt, und
- aus den bestimmten Nachbarschaften ein Gitter mit zugeordneten quantisierten Codezuständen erzeugt und diese quantisierten Codezustände in einer Matrix einträgt,
- die Matrix zu decodieren, indem
- eine Zuordnungstabelle der detektierten Codelemente zu Indizes der Strahlen der Beleuchtungsquelle oder zu Sollpositionen gebildet wird, und
- anhand der Zuordnungstabelle und abgespeicherten Modelldaten der Strahlungsquelle und des Bildsensors ein dreidimensionales Modell des von der Kamera aufgenommenen Objekts berechnet wird.

12. Verfahren gemäß einem der beiden vorstehenden Ansprüche, bei welchem Nachbarschaftswahrscheinlichkeiten von Codeelementen unter Berücksichtigung des gegenseitigen Abstandes der Codeelemente im Digitalbild berechnet werden, und wobei anhand der Nachbarschaftswahrscheinlichkeiten Codeelementen zu Chains zusammengefasst werden.

13. Verfahren gemäß einem der drei vorstehenden Ansprüche, bei welchem von der Recheneinrichtung (60) die Positionen der Codeelemente aus dem Digitalbild mit Subpixel-Genauigkeit bestimmt werden.

14. Verfahren gemäß einem der vier vorstehenden Ansprüche, wobei von der Beleuchtungseinrichtung (60) ein Beleuchtungsmuster (50) mit inselförmigen Codeelementen erzeugt wird, wobei die Codeelemente eine Modulation bezüglich ihrer Form oder Größe aufweisen, und wobei in der Modulation Positionsinformation codiert ist.

15. Verfahren gemäß einem der fünf vorstehenden Ansprüche, wobei die Beleuchtungseinrichtung (1) ein Beleuchtungsmuster (50) erzeugt, bei welchem die Codeelemente in einem hexagonalen Raster angeordnet sind.

16. Verfahren gemäß einem der sechs vorstehenden Ansprüche, wobei das Objekt (10) von der Beleuchtungseinrichtung (1) mittels mehrerer Beleuchtungsvorrichtungen beleuchtet wird.
Es folgen 6 Blatt Zeichnungen
